Europäisches Patentamt

European Patent Office

Office européen des brevets

(11) Numéro de publication: **0 225 229 B1**

(12) **FASCICULE DE BREVET EUROPEEN**

(45) Date de publication de fascicule du brevet:
24.04.91

(51) Int. Cl.⁵: **G01F 1/60**

(21) Numéro de dépôt: **86402397.3**

(22) Date de dépôt: **27.10.86**

(54) **Débitmètre électromagnetique à champ magnetique pulse.**

(30) Priorité: **31.10.85 FR 8516192**

(43) Date de publication de la demande:
**10.06.87 Bulletin 87/24**

(45) Mention de la délivrance du brevet:
**24.04.91 Bulletin 91/17**

(84) Etats contractants désignés:
**CH DE GB IT LI NL SE**

(56) Documents cités:
**DE-A- 2 725 026**
**US-A- 4 290 313**
**US-A- 4 408 497**

(73) Titulaire: **ELSAG INTERNATIONAL B.V.**
**Hoekenrode 6 P.O. Box 1469**
**NL-Amsterdam(NL)**

(72) Inventeur: **De Paepe, Thijbert**
**6, Sentier de la Batterie de l'Yvette**
**F-91120 Palaiseau(FR)**
Inventeur: **Crochet, Gérard**
**Lotissement des Pommiers 22, rue de Chevreuse**
**F-78720 Cernay la Ville(FR)**

(74) Mandataire: **Kremer, Robert A.M.**
**BUREAU D.A. CASALONGA - JOSSE Morassistrasse 8**
**W-8000 München 5(DE)**

Rank Xerox (UK) Business Services

## Description

La présente invention concerne un débitmètre électromagnétique, et plus particulièrement un circuit d'élaboration du champ magnétique et de traitement de la tension recueillie par les électrodes du débitmètre.

Dans un débitmètre électromagnétique tel que décrit dans le brevet françaïse 2 405 466 le liquide dont on veut mesurer le débit circule dans une portion de conduite munie de bobines d'induction pour créer un champ magnétique perpendiculaire à l'axe de la portion de conduite et d'une paire d'électrodes diamétralement opposées pour recueillir la tension résultant de l'écoulement du liquide interceptant le champ magnétique. Cette tension est proportionnelle à la vitesse moyenne d'écoulement du liquide et donc au débit moyen. Il suffit de traiter cette tension pour obtenir un signal électrique représentatif du débit du liquide.

Pour créer le champ magnétique on peut utiliser soit un courant sinusoïdal soit un courant continu pulsé.

Dans le cas d'une commande par un courant sinusoïdal la fréquence du signal est en général de l'ordre de 30 à 50 Hz. Le signal recueilli sur les électrodes se compose : d'un signal de débit en phase avec la modulation du courant; d'un signal parasite d'induction, en quadrature avec la modulation du courant; et d'un deuxième signal parasite ayant une phase et une amplitude variables en fonction de la nature du fluide et de l'état de surface des électrodes.

Un tel système présente une dérive du signal même lorsque le débit est nul. Cette dérive peut atteindre plusieurs % selon le type de fluide et d'électrodes. Le réglage du zéro doit être fait sur l'installation par l'utilisateur. Cependant, avec ce type d'alimentation, on peut éliminer facilement par filtrage des bruits de très basse fréquence (inférieure à 10 Hz) créés par les liquides résistants chargés, ou les liquides qui présentent des propriétés marquées acides ou basiques. Compte tenu de la fréquence du signal de base (30 à 50 Hz), il est possible d'effectuer un filtrage efficace avec une constante de temps faible, par exemple inférieure à 3 secondes. Une telle constante de temps est compatible avec l'insertion du débitmètre dans une chaîne de régulation, par exemple.

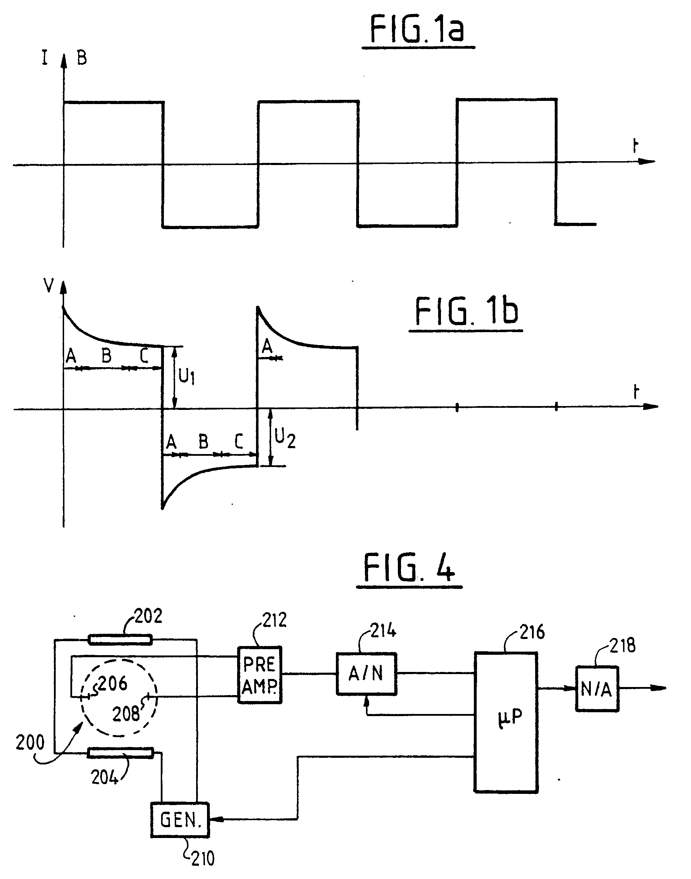

Dans le cas d'une commande à courant pulsé on choisit en général une fréquence de modulation comprise entre 1 et 10 Hz. Les figures 1a et 1b annexées illustrent le fonctionnement des débitmètres de l'art antérieur à commande par courant pulsé.

La figure 1a montre l'intensité I du courant de commande, ou l'intensité B du champ magnétique créé en fonction du temps t. La figure 1b montre le signal de tension (V) correspondant recueilli sur les électrodes du débitmètre en fonction du temps, pour un débit donné d'un liquide donné.

Chaque impulsion du signal de tension comporte : une première zone A correspondant à un effet parasite d'induction créé lors de l'inversion du sens du champ magnétique, et une zone B correspondant à un effet de traînage produit dans l'interface fluide-électrode au moment de l'inversion du champ magnétique. Comme le montre la courbe de la figure 1b cet effet parasite s'élimine lentement pour laisser place à un signal pur de débit correspondant à la zone C. Pour prélever le signal de débit il faut se placer dans la zone C de l'impulsion. Le signal de débit est alors proportionnel à $U_1 - U_2$. Ce système présente un zéro ayant une grande stabilité, et de plus l'écart de zéro est auto-compensé puisque le signal de mesure résulte de la différence de deux tensions ce qui élimine une tension parasite continue dite tension d'asymétrie. La figure 1b ne prend pas en compte la tension d'asymétrie. Le brevet français déjà cité décrit en détail l'élimination de la tension d'asymétrie. En revanche, ce système d'alimentation rend difficile l'élimination correcte des bruits de basse fréquence, ce qui se présente dans le cas des fluides non homogènes et des boues. En effet, compte tenu de la fréquence du signal à filtrer (1 à 10 Hz), la constante de temps du circuit de filtrage peut atteindre plusieurs dizaines de secondes. Il est alors très difficile, sinon impossible, d'utiliser un tel débitmètre dans un circuit de régulation, car pour obtenir un signal de mesure exempt de bruit, le temps de réponse devient trop long.

Pour résoudre ce type de problème la demande de brevet allemand DE-A-2.725.026 décrit un débitmètre électromagnétique dans lequel une tension de correction est élaborée en effectuant une mesure en l'absence de champs magnétique.

Un objet de l'invention est de fournir un débitmètre électromagnétique qui combine à la fois les avantages des deux principes connus pour obtenir une mesure de débit ayant une réponse rapide avec peu de brvit et sans dérive de zéro. Un tel débitmètre sera donc plus facilement utilisable par exemple dans une chaîne de régulation.

Pour atteindre ce but, le débitmètre électromagnétique selon l'invention, qui comprend un tube de mesure muni de bobines d'excitation pour créer un champ magnétique transversal, des électrodes disposées diamétralement à l'intérieur du tube, un circuit pour appliquer un courant aux électro-aimants, et un circuit pour traiter la tension recueillie aux bornes desdites électrodes, ladite tension étant susceptible d'être affectée d'un phénomène de traînage, se caractérise en ce que le circuit d'alimentation comprend des moyens pour élaborer un courant d'excitation périodique de période T, chaque période T résultant de la combinaison dans le temps de n périodes d'un premier courant d'excitation $I_1$ de période $T_1$ et de m périodes d'un deuxième courant d'excitation $I_2$ de période $T_2$ avec $T_2 > T_1$, la période $T_2$ étant suffisamment longue pour qu'une partie du signal de tension recueilli correspondant soit exempt du phénomène de traînage, et en ce que ledit circuit de traitement comprend des moyens pour élaborer un premier signal intermédiaire de mesure $M_1$ de période $T_1$ présentant un faible temps de téponse, un deuxième signal intermédiaire de mesure $M_2$ correspondant au signal de tension de période $T_2$ ne présentant pas de dérive de mesure, et pour combiner et filtrer les deux signaux intermédiaires de mesure afin d'élaborer un signal de mesure S avec un faible temps de réponse et exempt de dérive.

On comprend qu'ainsi le premier signal intermédiaire $M_1$ présente suffisamment d'impulsions par période T pour qu'on puisse faire un filtrage efficace sur un nombre limité de périodes T et que chaque impulsion du signal de tension de période $T_2$ est suffisamment longue pour comporter une partie exempte de phénomène de trainage.

Selon un premier mode de mise en oeuvre, les premier et deuxième courants d'excitation sont des courants dont chaque période est formée par une paire d'impulsions alternées, de durée respective T1/2 et T2/2, et en ce que ladite combinaison consite à faire se succéder en alternance dans le temps n périodes du premier courant et m périodes du deuxième courant, de telle manière qu'on ait la relation :

$$T = nT_1 + mT_2$$

Selon un deuxiéme mode de mise en oeuvre, ledit premier courant d'excitation est un courant sinusoïdal et chaque période dudit deuxième courant d'excitation consiste en une paire d'impulsions alternées de durée t' = T2/2 ladite combinaison consistant à ajouter ledit deuxième courant à l'aide dudit premier courant de telle manière qu'on ait la relation :

$$T = nT_1 = T_2$$

De préférence encore la période $T_1$ est comprise entre 0,005 et 0,1 seconde, m est égal à 1, et la période $T_2$ est comprise entre 0,05 seconde et une seconde.

Selon un mode préféré de mise en oeuvre le circuit de traitement comprend des moyens pour élaborer à partir des signaux intermédiaires de mesure $M_1$ et $M_2$, un signal de correction sensiblement exempt de bruit et, à partir du signal $M_1$ et

du signal de correction, un signal de mesure sensiblement exempt de dérive.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel :

- les figures 1a et 1b, déjà décrites, illustrent un mode de traitement du signal recueilli par les électrodes d'un débitmètre électromagnétique selon l'art antérieur ;
- la figure 2 est un schéma montrant un premier mode de réalisation du circuit de traitement du signal de tension recueilli aux électrodes du débitmètre ;
- la figure 2a montre une variante de réalisation du circuit de traitement de la figure 2 ;
- les figures 3a à 3e montrent respectivement le champ magnétique fourni par les bobines d'induction selon un premier mode de mise en oeuvre de l'invention, le signal de tension correspondant recueilli aux électrodes, et les signaux de commande utilisés dans le circuit de la figure 2 ;
- la figure 4 est un schéma montrant une variante de réalisation du circuit de traitement du signal de tension, selon le premier mode de mise en oeuvre de l'invention ;
- la figure 5 montre d'autres formes possibles pour le signal de commande du champ magnétique du débitmètre;
- la figure 6 montre un schéma d'un deuxième mode de réalisation du débitmètre selon l'invention; et
- la figure 6a montre la forme des signaux de commande utilisés dans le mode de réalisation de la figure 6.

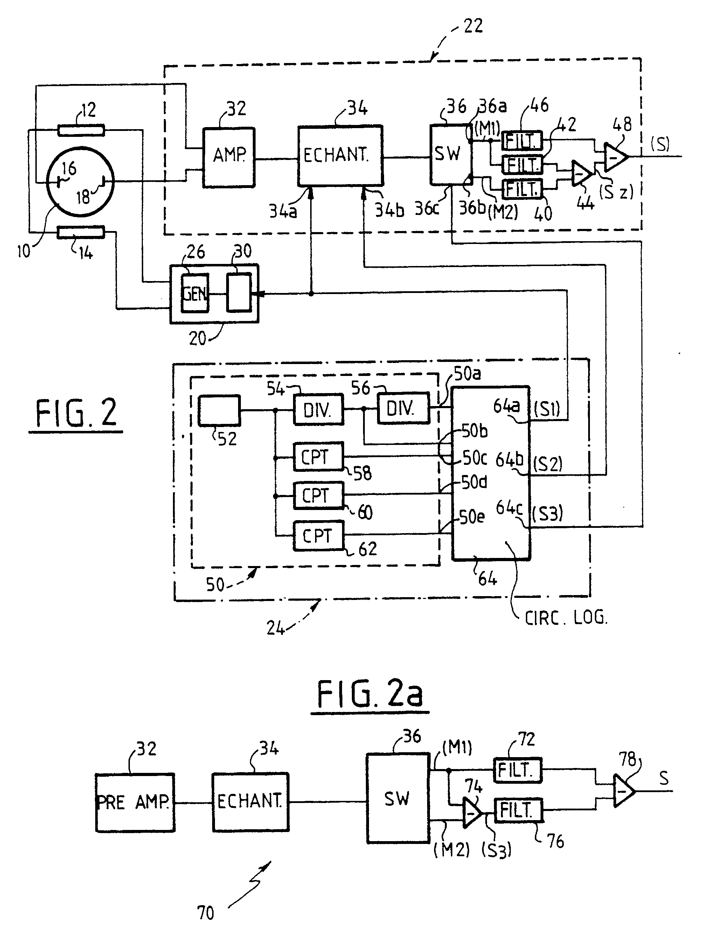

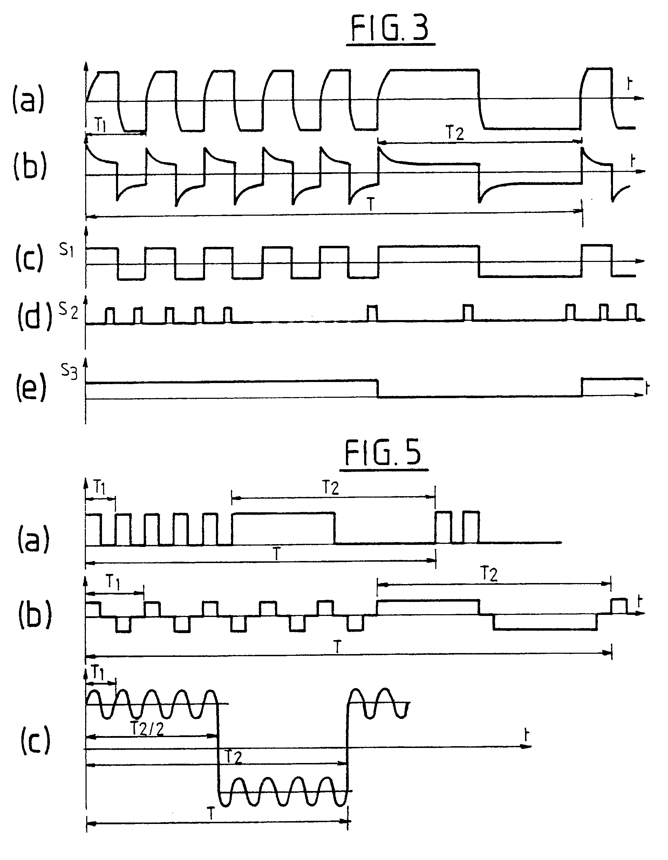

En se référant d'abord aux figures 2 et 3, on va décrire un premier mode de réalisation du débitmètre électromagnétique selon l'invention.

Comme le montre la figure 2, le débitmètre comprend un tube de mesure cylindrique 10 dans lequel s'écoule le liquide dont on veut mesurer le débit. Le tube 10 est muni de deux bobines d'induction 12 et 14 diamétralement opposées pour produire un champ magnétique perpendiculaire au sens d'écoulement du liquide, c'est-à-dire perpendiculaire à l'axe XX' du tube 10. Le tube comporte également deux électrodes 16 et 18 diamétralement opposées qui sont en contact avec le liquide en circulation dans le tube. Les électrodes 16 et 18 servent à recueillir la force électromotrice créée par l'écoulement du liquide dans le champ magnétique produit par les bobines d'induction 12 et 14.

Le débitmètre comprend en outre un circuit électronique constitué par un circuit 20 d'alimentation des bobines d'induction 12 et 14, un circuit 22 de traitement du signal de tension recueilli par les électrodes 16 et 18, et un circuit de séquencement 24 pour contrôler les circuits 20 et 22.

Selon le premier mode de réalisation du débitmètre, le circuit d'alimentation 20 est constitué par un générateur 26 de courant d'intensité constante positive ou négative commandé en tension, et un circuit de commande 30 du générateur 26 permettant d'inverser le sens du courant dans les bobines d'induction 12 et 14.

Le circuit de traitement 22 comprend un préamplificateur 32 dont les entrées sont reliées aux électrodes 16 et 18 et un circuit d'échantillonnage et de calcul 34 relié à la sortie du préamplificateur 32.

La sortie du circuit 34 est reliée à un circuit de sélection et de commutation 36 qui permet de commander des filtres décrits ci-apprès.

Les deux sorties $36_a$ et $36_b$ du circuit sélecteur 36 sont reliées respectivement aux entrées de deux filtres respectivement référencés 40 et 42 présentant des constantes de temps $t_3$ et $t_2$ aussi égales que possible. Ces filtres sont des filtres passe-bas. Les sorties des filtres 40 et 42 sont reliées aux entrées d'un soustracteur 44. La sortie $36_a$ du sélecteur 36 est également reliée à l'entrée d'un troisième filtre passe-bas 46, de constante de temps $t_1$, $t_1$ étant très inférieur à $t_2$ et $t_3$. Les sorties du soustracteur 44 et du filtre 46 sont reliées aux entrées d'un soustracteur 48.

Avant de décrire la structure du circuit de séquencement 24, on va se référer aux diagrammes des temps de la figure 3.

Le diagramme a montre les variations en fonction du temps du courant qui est appliqué aux bobines d'induction 12 et 14 et donc, sensiblement, les variations en fonction du temps du champ magnétique créé par les bobines d'induction.

Le courant d'excitation a une période T, constituée par deux séries d'impulsions alternées $I_1$ et $I_2$ ayant toutes la même amplitude. La première série d'impulsions $I_1$ est formée, dans le cas de la figure 3, par 5 périodes $T_1$ d'impulsions alternées de forme rectangulaire. La deuxième série $I_2$ est constituée par une période $T_2$ d'impulsions alternées également de forme rectangulaire. On a donc la relation :

$$T = 5T_1 + T_2$$

Plus généralement, la période T est formée par 2n impulsions alternées sucessives de période $T_1$ et 2m impulsions alternées successives de période $T_2$, ce qui donne la relation :

$$T = nT_1 + mT_2 \text{ avec } T_1 \prec T_2$$

Le diagramme b de la figure 3 montre la forme de la tension recueillie par les électrodes. Comme on l'a déjà expliqué, les impulsions de tension recueillies sont affectées d'un effet parasite de traînage. Cet effet peut affecter la totalité de la durée des impulsions de période $T_1$. Au contraire, la période $T_2$ est choisie suffisamment grande pour que la fin de chaque impulsion soit exempte de ce phénomène de traînage.

Le circuit de séquencement 24 a pour but, d'une part de commander l'application aux bobines d'induction d'un courant impulsionnel ayant la forme représentée sur le diagramme a de la figure 3, et d'autre part d'élaborer les signaux de commande du circuit de traitement 22.

Le diagramme c montre la forme du signal $S_1$ pour contrôler l'élaboration du courant appliqué aux bobines d'induction. Le signal $S_1$ a une période T et il est constitué par 5 impulsions de durée T1/2 séparées par des intervalles de temps égaux à T1/2 et par une impulsion de durée T2/2 séparée par un intervalle de temps égal à T2/2. Le signal $S_1$ est au niveau haut lorsque le courant doit être positif et au niveau zéro lorsque le courant doit être négatif.

Le diagramme d de la figure 3 montre un signal $S_2$ qui sert à commander les instants de mesure du signal de tension délivré par les électrodes 16 et 18. Le signal $S_2$ a une période T. Chaque période comprend une première série de 10 impulsions (2n) séparées par des intervalles de temps, égaux à $T_1/2$. Chacune de ces impulsions de cette partie du signal $S_2$ est décalée par rapport à l'impulsion correspondante du signal $S_1$ d'une durée $b_1 = a T_1$ (avec a inférieur à 1). Chaque période du signal $S_2$ comprend également deux impulsions (2m) séparées par des intervalles de temps égaux à $T_2/2$. Ces impulsions du signal $S_2$ sont décalées par rapport aux impulsions correspondantes du signal $S_1$ d'une durée $b_2 = bT_2 - $ (avec b inférieur à 1).

Les valeurs a et b sont choisies pour qu'une impulsion du signal $S_2$ soit présente à la fin de chaque impulsion du signal de tension. Le nombre b est déterminé plus précisément de telle manière que l'impulsion correspondante du signal $S_2$ soit présente pour la portion de l'impulsion de tension qui est exempte du phénomène de traînage.

Le diagramme e de la figure 3 donne la forme d'un troisième signal de commande $S_3$ de période T qui sert à distinguer la portion de chaque période T où les impulsions de période $T_1$ sont présentes de la portion de la même période T où les impulsions de période $T_2$ sont présentes. Chaque période du signal $S_3$ comprend une impulsion positive de durée $5T_1$ ($nT_1$) et une impulsion négative de

durée $T_2$ (m$T_2$).

On va maintenant revenir à la figure 2 pour décrire plus en détail la structure du circuit de séquencement 24.

Le circuit 24 comprend un générateur 50 qui délivre en permanence sur ses sorties 50a, 50b, 50c 50d et 50e des signaux de périodes $T_1$, $T_2$, n$T_1$, m$T_2$ et le signal décalé de commande $S_2$. Le générateur 50 comprend un oscillateur 52 qui délivre un signal de période T' avec T' très inférieure à $T_1$. La sortie de l'oscillateur 52 est reliée à l'entrée de deux diviseurs de fréquence 54 et 56 qui délivrent les signaux de périodes $T_1$ et $T_2$ et de trois compteurs 58, 60 et 62 pour délivrer respectivement le signal $S_2$ et les signaux de période n$T_1$ et m$T_2$. Les sorties 50 a à 50e du générateur 50 sont reliées aux entrées d'un circuit logique 64 qui délivre sur ses sorties 64a, 64b et 64c les signaux de commande $S_1$, $S_2$ et $S_3$. Un tel circuit logique est connu et il n'est donc pas nécessaire de le décrire plus en détail.

Le signal $S_1$ est appliqué à l'entrée du circuit de commande 30 du générateur de courant, et à l'entrée de commande 34a du circuit 34. Le signal $S_2$ est appliqué à l'entrée de commande d'échantillonnage 34b du circuit 34. Enfin, le signal $S_3$ est appliqué à l'entrée de commande 36c du sélecteur 36.

Le fonctionnement du circuit de la figure 2 est le suivant : Le courant constant délivré par le générateur 26 est appliqué aux bobines d'induction avec une polarité alternée, les instants d'inversion étant commandés par le signal $S_1$. Ce courant a la forme représentée par le diagramme a de la figure 3. Selon un mode particulier de mise en oeuvre la période $T_1$ vaut 32 ms et la période $T_2$ vaut 131 ms. La période T du courant vaut donc 291ms La tension recueillie par les électrodes 16 et 18 a la forme représentée par le diagramme b de la figure 3. Chaque période T comprend cinq paires d'impulsions alternées de période $T_1$, et une paire d'impulsions alternées de période $T_2$, chaque impulsion pouvant être affectée d'un effet de traînage et de bruit. La tension prélevée est amplifiée par le préamplificateur 32. L'échantilloneur 34 prélève un échantillon du signal à la fin de chaque impulsion à des instants définis par le signal $S_2$ et le signal $S_1$ commande le calcul de la différérence des valeurs échantillonnées. Comme le commutateur 36 est commandé par le signal $S_3$, les échantillons de la partie du signal de période de temps $T_2$ qui forment un deuxième signal intermédiaire de mesure $M_2$ sont appliqués à l'entrée du filtre 40. Comme on l'a déjà expliqué ces échantillons sont affectés par un bruit mais sont exempts de phénomène de traînage. Il y a un échantillon par période T qui vaut 291 ms. Pour la même raison les échantillons de la partie du signal de période $T_1$, qui forment

un signal intermédiaire de mesure $M_1$, sont appliqués aux entrées des filtres 42 et 46 de constante de temps $t_2$ et $t_1$. Ces échantillons sont affectés par le bruit et par l'effet de traînage. Il y a 5 échantillons par période T.

Les constantes de temps $t_3$ et $t_2$ sont identiques et égales à 30 secondes. La valeur commune de la constante de temps est suffisante pour assurer un bon filtrage du bruit bien qu'il n'y ait qu'un seul échantillon par période T. La sortie du soustracteur 44 délivre un signal $S_z$ de correction qui donne le signal de mesure de l'erreur due à l'effet de traînage et exempte du bruit.

Le signal délivré par le filtre 46, qui a une constante de temps $t_1$ sensiblement plus faible, par exemple égale à 3 secondes, est très bien filtré mais affecté par l'effet de traînage.

La sortie du soustracteur 48 délivre donc un signal de mesure S dépourvu d'effet de traînage et de bruit et qui est utilisable dans un système de régulation puisque, globalement, tout se passe comme si le filtrage avait été effectué avec la contante de temps réduite $t_1$ égale à 3 secondes.

La figure 2a montre une variante de réalisation du circuit de traitement 22 de la figure 2.

Ce circuit référencé 70 comprend, comme le circuit 22, le préamplificateur 32, le circuit de calcul et d'échantillonnage 34 et le circuit de sélection 36 avec ses deux sorties 36a et 36b. La sortie 36a sur laquelle apparaît le premier signal intermédiaire de mesure $M_1$ de période $T_1$ est reliée à l'entrée d'un filtre passe-bas 72 identique au filtre 46 qui a la constant de temps $t_1$, et d'une des bornes d'entrée d'un soustracteur 74. La sortie 36b du sélecteur 36, sur laquelle apparaît le deuxième signal intermédiaire de mesure $M_2$, de période $T_2$, est reliée à la deuxième borne d'entreé du soustracteur 74. La sortie du soustracteur 74 qui délivre un signal de correction est reliée à l'entrée d'un filtre passe-bas 76 de constante de temps $t_2$ identique à celle du filtre 40. Les sorties des filtres 72 et 76 sont reliées aux entrées d'un soustracteur 78 qui délivre le signal S de mesure avec les caractéristiques déjà décrites.

La figure 4 montre une variante du premier mode de réalisation du circuit électronique associé au capteur de mesure. Selon cette variante de réalisation, on effectue un traitement numérique du signal au lieu d'effectuer un traitement analogique comme dans le cas de la figure 2.

Le débitmètre de la figure 4 comprend le capteur proprement dit constitué par le tube de mesure 200, les bobines d'induction 202 et 204, et les électrodes 206 et 208 servant à prélever le signal de tension.

Le circuit électronique comprend essentiellement une source de courant 210 pour alimenter les bobines d'induction 202 et 204, un préamplificateur-adaptateur d'impédance 212 qui reçoit le signal de tension présent sur les électrodes 206 et 208, un convertisseur analogique-numérique 214 qui convertit le signal de tension en un signal numérique et qui réalise de plus la fonction d'échantillonnage et un micro-processeur 216 qui remplit à la fois la fonction de séquencement et de traitement du signal. Le circuit peut comporter de plus un convertisseur numérique-analogique 218 pour délivrer un courant dont l'intensité est représentative du débit calculé par le microprocesseur 216.

Le microprocesseur 216 est de préférence un micro-contrôleur du type 6803 de Motorola élabore numériquement les signaux $S_1$ et $S_2$ de la figure 3 qui sont appliqués respectivement à l'alimentation en courant 210 et au convertisseur analogique-numérique 214. Le programme d'élaboration des signaux $S_1$ et $S_2$ à partir d'un signal d'horloge est bien connu et il n'est donc pas nécessaire de la décrire plus en détail Il effectue également un filtrage numérique des portions du signal de tension correspondant respectivement aux périodes $T_1$ et $T_2$ et il combine les signaux filtrés comme cela est fait par les circuits analogiques de la figure 3.

L'avantage du traitement numérique est, notamment, qu'il est possible de définir avec une grande précision les paramètres de filtrage. On peut ainsi obtenir des constantes de temps $t_2$ et $t_3$ ayant des valeurs très semblables.

Le traitement numérique, notamment le filtrage, des signaux numérisés à l'aide d'un microprocesseur est bien connu, il n'est pas nécessaire de la décrire plus en détail. Cette technique est en particulier décrite dans le "Journal of the Audio Engineering Society" Octobre 1979, Volume 27, numéro 10, pages 793 à 802 et dans "Theory and Application of Digital Signal Processing" de Laurence R. Rabiner publié en 1975 par Prentice-Hall.

Dans la description précédente le signal de commande du champ magnétique est constitué par une combinaison de deux signaux $I_1$ et $I_2$ formés d'impulsions alternées de périodes respectives $T_1$ et $T_2$, la combinaison consistant à faire se succéder alternativement dans le temps des groupes de n périodes du signal $I_1$ de période $T_1$ et des groupes de m périodes du signal $I_2$ de période $T_2$.

Les diagrammes (a), (b), et (c) de la figure 5 montrent d'autres combinaisons possibles des signaux $I_1$ et $I_2$ de période $T_1$ et $T_2$ pour élaborer le champ magnétique.

Les diagrammes (a) et (b) et la figure 5 montrent deux autres formes de signaux de commande obtenus par la même combinaison des signaux de périodes $T_1$ et $T_2$. Dans le cas du diagramme (a) chaque période du signal $T_1$ est constituée par une impulsion de durée T1/2 suivie d'un signal nul de durée T1/2. Dans le cas du diagramme (b) chaque période $T_1$ ou $T_2$ comprend une paire d'impulsions alternées, mais les deux impulsions sont séparées par une zone de niveau zéro.

Dans le cas du diagramme (c) le signal $I_1$ de période $T_1$ est un signal sinusoïdal d'amplitude constante, et le signal $I_2$ de période $T_2$ est constitué par des impulsions alternées de durée T2/2. De plus, $T_2$ est un multiple de $T_1$. La combinaison de ces deux signaux, pour obtenir le signal de commande consiste à ajouter le signal logique de période $T_2$ au signal sinusoïdal de période $T_1$. On comprend que dans ce cas la période T du signal de commande est égale à $T_2$.

Dans tous les cas, chaque période du signal de période $T_2$ comporte une impulsion de durée t', t' étant suffisamment longue pour que la fin de l'impulsion correspondante de tension soit dépourvue de phénomène de traînage.

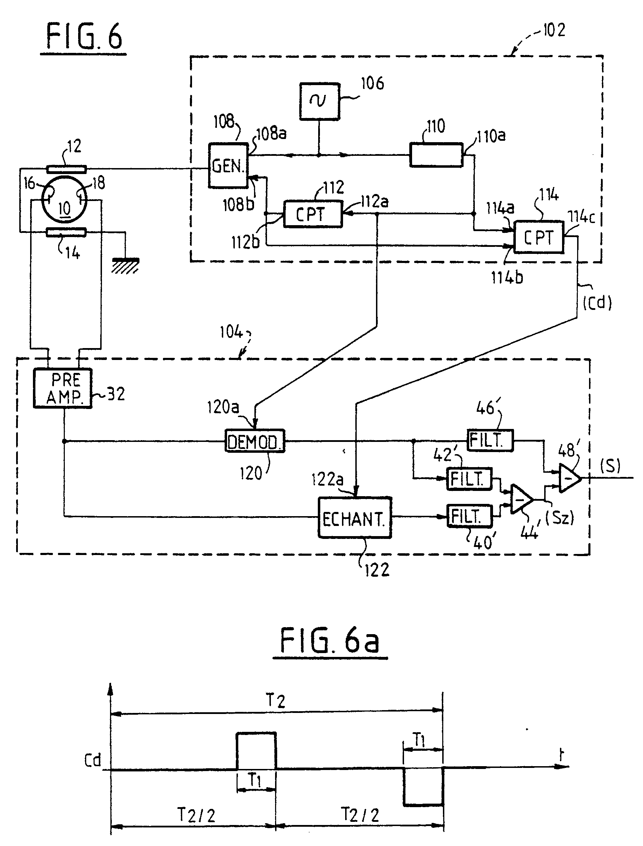

La figure 6 illustre un deuxième mode de réalisation du débitmètre dans lequel on utilise un champ magnétique qui est élaboré par le signal de commande représenté sur le diagramme (c) de la figure 5. Il comprend un tube de mesure 10 muni de deux bobines d'induction 12 et 14 et de deux électrodes 16 et 18. Le débitmètre comprend de plus un circuit 102 d'élaboration du courant appliqué aux bobines d'induction 12 et 14 et un circuit 104 de traitement du signal de tension apparaissant aux électrodes 16 et 18 du débitmètre.

Le circuit d'alimentation 102 comprend un oscillateur 106 qui délivre un signal sinusoïdal de période $T_1$; la sortie de l'oscillateur 106 est reliée d'une part à une entrée 108a d'un générateur de courant 108 et d'autre part à l'entrée d'un circuit de mise en forme 110. Le circuit 110 délivre sur sa sortie 110a un signal d'impulsions rectangulaires alternées de même période $T_1$ que le signal sinusoïdal délivré par l'oscillateur 106. La sortie 110a du circuit 110 est reliée d'une part à l'entrée 112a d'un compteur 112 et d'autre part à une première entrée 114a d'un circiut logique 114. Le compteur 114 délivre sur sa sortie 114c un signal d'impulsions alternées de période $T_2$, $T_2$ étant un multiple de $T_1$. La sortie 112 b du compteur 112 est reliée d'une part à une deuxième entrée 108b du générateur de courant 108 et d'autre part à une deuxième entrée 114 b du circuit logique 114. En réponse aux signaux appliqués sur ses entrées 108a et 108b le générateur de courant 108 délivre un courant fourni aux bobines d'induction qui a la forme représentée sur le diagramme (c) de la figure 5. Le circuit logique 114 délivre sur sa sortie 114c un signal logique Cd représenté sur la figure 6a et formé d'impulsions alternées de période $T_2$ de telle manière que les deux impulsions alternées d'une période soient présentes lors des deux dernières périodes du signal alternatif associées respectivement à l'impulsions positive et à l'impulsion négative du signal délivré par le compteur 112.

Le circuit de traitement 104 comprend un préamplificateur 116 qui reçoit la tension recueillie par les électrodes 16 et 18 du débitmètre. La sortie du préamplificateur 116 est reliée d'une part à l'entrée d'un démodulateur synchrone 120 et d'autre part à l'entrée d'un échantillonneur soustracteur 122. L'entrée de commande 120a du démodulateur 120 reçoit le signal délivré par le circuit de mise en forme 110 et l'entrée de commande 122a de l'echantillonneur 122 reçoit le signal délivré par le circuit logique 114. Ainsi le démodulateur 120 délivre sur sa sortie un premier signal intermédiaire de mesure provenant des tensions recueillies aux électrodes correspondant au signal sinusoïdal de période $T_1$. La sortie du circuit 122 délivre un deuxième intermédiaire de mesure qui correspond à la différence entre un échantillon positif du signal complet prélevé pendant une période complète du signal sinusoïdal et un échantillon négatif du signal complet prélevé pendant une période complète du signal sinusoïdal. Comme les deux moments d'échantillonnage se situent à la fin des impulsions de période $T_2$ la valeur des échantillons n'est pas altérée par l'effet de traînage. Le circuit 104 comprend enfin les filtres passe-bas 40', 42' et 46' analogues aux filtres 40, 42 et 46 de la figure 2, et les soustracteurs 44' et 48' identiques aux circuits 44 et 48 de la figure 2. Le soustracteur 48' délivre ainsi sur sa sortie un signal de mesure de débit S qui n'est pas affecté par des phénomènes de dérive ou de bruit.

Ce deuxième mode de réalisation présente l'avantage, pour des périodes $T_1$ et $T_2$ données, de diminuer la valeur de la période globale T puisqu'on a $T = T_2$ au lieu d'avoir $T = nT_1 + mT_2$. En revanche, les circuits sont un peu plus complexes puisqu'ils doivent traiter non seulement des signaux logiques mais également des signaux sinusoïdaux.

Dans la description précédente les nombres de périodes m et n des signaux sont des nombres entiers, cependant, il va de soi que ces nombres pourraient ne pas être entiers, mais m et n sont supérieurs ou égaux à un et n doit être supérieure à m.

De même, on obtient un signal de mesure (S) de bonne qualité pour $T_1$ compris entre 0,01 seconde et 0,05 seconde et pour $T_2$ compris entre 0,05 seconde et 1 seconde, cette dernière valeur étant surtout acceptable dans le cas d'un courant ayant la forme représentée sur le diagramme (C) de la figure 5.

On voit qu'ainsi, dans tous les modes de réalisation de l'invention, le signal de mesure S est obtenu en élaborant : des signaux intermédiaires de mesure $M_1$ et $M_2$ correspondant respectivement aux périodes $T_1$ et $T_2$ du signal recueilli sur les électrodes ; puis un signal de correction à partir des signaux $M_1$ et $M_2$ qui est représentatif du seul phénomène de trainage; et enfin le signal de mesure S à partir du signal $M_1$ et du signal de correction.

## Revendications

1. Débitmètre électromagnétique comprenant un tube de mesure dans lequel circuit un fluide dont on veut mesurer le débit, des bobines d'induction parcourures par un courant d'excitation pour créer un champ magnétique perpendiculaire au sens d'écoulement du liquide, des électrodes diamétralement opposées pour recueillir le signal de tension résultant de l'écoulement du liquide interceptant le champ magnétique, un circuit d'alimentation desdites bobines d'induction, et des moyens de traitement du signal de tension recueilli par les électrodes, caractérisé en ce que le circuit d'alimentation comprend des moyens pour élaborer un courant d'excitation périodique de période T, chaque période T résultant de la combinaison dans le temps de n périodes d'un premier courant d'excitation ($I_1$) de période $T_1$ et de m périodes d'un deuxième courant d'excitation ($I_2$) de période $T_2$ avec $T_2 > T_1$, la période $T_2$ étant suffisamment longue pour qu'une partie du signal de tension recueilli correspondant soit exempt de phénomène de traînage, et en ce que ledit circuit de traitement comprend des moyens pour élaborer un premier signal intermédiaire de mesure ($M_1$) de période $T_1$ présentant un faible temps de réponse, un deuxième signal intermédiaire de mesure ($M_2$) correspondant au signal de tension de période $T_2$ ne présentant pas de dérive de mesure, et pour combiner et filtrer les deux signaux intermédiaires de mesure ($M_1$, $M_2$) afin d'élaborer un signal de mesure S avec un faible temps de réponse et exempt de dérive.

2. Débitmètre selon la revendication 1, caractérisé en ce que les premier et deuxième courants d'excitation sont des courants dont chaque période est formée par une d'impulsions alternées, de durée respective T1/2 et T2/2, et en ce que ladite combinaison consiste à faire se succéder en alternance dans le temps n périodes du premier courant et m périodes du deuxième courant, de telle manière qu'on ait la relation :

$$T = nT_1 + mT_2$$

3. Débitmètre selon la revendication 1, caractérisé en ce que ledit premier courant d'excitation est un courant sinusoïdal et en ce que chaque période dudit deuxième courant d'excitation consiste en une paire d'impulsions alternées de durée $t' = T2/2$ ladite combinaison consister à ajouter ledit deuxième courant à l'aide dudit premier courant de telle manière qu'on ait la relation :

$$T = nT_1 = T_2$$

4. Débitmètre selon la revendication 2, caractérisé en ce que $m$ est égal à 1, la période $T_1$ est comprise entre 0,1 et 0,005 seconde et la période $T_2$ est comprise entre 0,05 seconde et 1 seconde.

5. Débitmètre selon la revendication 3, caractérisé en ce que la période $T_2$ est comprise entre 0,05 seconde et une seconde et en ce que la période $T_1$ est comprise entre 0,1 seconde et 0,005 seconde.

6. Débitmètre selon l'une quelconque des revendications 1 à 5, caractérisé en ce que ledit circuit de traitement comprend des moyens pour élaborer à partir des signaux intermédiaires de mesure ($M_1$ et $M_2$), un signal de correction sensiblement exempt de bruit et, à partir du premier signal intermédiaire de mesure ($M_1$) et du signal de correction, un signal de mesure (S) sensiblement exempt de dérive.

7. Débitmètre selon la revendication 6, caractérisé en ce que ledit signal de correction sensiblement exempt de bruit est représentatif de l'erreur de traînage mesurée à des instants prédéterminés par rapport au signal de tension de période $T_1$, et que ledit premier signal intermédiaire de mesure ($M_1$) est représentatif dudit signal de tension de période $T_1$, auxdits instants prédéterminés.

8. Débitmètre selon l'une quelconque des revendication 1 à 7, caractérisé en ce que ledit circuit de traitement comprènd des moyens pour filtrer, avec un temps de réponse $t_1$ le premier signal intermédiaire de mesure ( $M_1$ ), des moyens pour élaborer un signal de correction égal à la différence entre les deux signaux intermédiaires de mesure ($M_1$, $M_2$), des moyens pour filtrer avec un temps de réponse $t_2$ ladite différence de signaux, $t_2$ étant suffisamment grand pour que le signal de correction filtré soit sensiblement exempt de bruit, et des moyens pour retrancher cette différence filtrée au premier signal intermédiaire filtré, ce qui donne un signal de mesure (S) de temps de réponse $t_1$ sensiblement exempt de dérive.

9. Débitmètre selon l'une quelconque des revendications 1 à 7, caractérisé en ce que ledit circuit de traitement comprend des moyens pour filtrer, avec un temps de réponse $t_2$, les deux signaux intermédiaires de mesure ($M_1$, $M_2$) et pour élaborer le signal de correction égal à la différence des deux signaux filtrés, $t_2$ étant suffisamment grand pour que ces signaux filtrés soient exempts de bruit, des moyens pour filtrer le signal intermédiaire de mesure ($M_1$) avec un temps de réponse $t_1$, des moyens pour élaborer la différence entre ledit signal de correction et ledit signal intermédiaire de mesure ($M_1$) filtré avec le temps de réponse $t_1$ ce qui donne ledit signal de mesure de temps de réponse $t_1$ sensiblement exempt de dérive.

## Claims

1. An electromagnetic flow meter comprising: a measuring tube for passing the liquid whose flow rate is to be measured; induction windings having an excitation current passing therethrough for setting up a magnetic field perpendicular to the direction of liquid flow; diametrically-opposed electrodes for sensing the voltage signal which results from the flow of liquid through the magnetic field; a circuit for feeding current to said induction windings; and processor means for processing the voltage signal sensed by the electrodes; the flow meter being characterized in that the circuit for feeding current comprises means for generating a periodic excitation current of period T, each period T being the result of a combination in time of n periods of a first excitation current ($I_1$) of period $T_1$ and m periods of a second excitation current ($I_2$) of period $T_2$, where $T_2 > T_1$, with the period $T_2$ being long enough to ensure that a portion of the corresponding sensed voltage signal is free from the relaxation phenomenon; and in that said processor circuit comprises means for generating a first intermediate measurement signal ($M_1$) of period $T_1$ and having a short response time, a second intermediate measurement signal ($M_2$) corresponding to the voltage signal of period $T_2$ and being free from measurement drift, and for combining and filtering said first and second intermediate measurement signals in order to generate a measurement signal S being both short in response time and free from drift.

2. A flow meter according to claim 1, characterized in that the first and second excitation currents are currents in which the periods are constituted by alternating positive-going and negative-going pulses, each of duration $T_1/2$ or $T_2/2$ as the case may be, and in that said combination consists in alternating n periods of the first current with m periods of the second current so as to obtain the relationship:

$$T = nT_1 + mT_2$$

3. A flow meter according to claim 1, characterized in that the first excitation current is a sinewave current and in that each period of said second excitation current consists in a positive-going half cycle and a negative-going half cycle of duration $t' = T_2/2$, said combination consisting in superposing said first and second currents to obtain the relationship:

$$T = nT_1 = T_2$$

4. A flow meter according to claim 2, characterized in that m is equal to 1, the period $T_1$ lies in the range 100 milliseconds to 5 milliseconds, and the period $T_2$ lies in the range 50 milliseconds to 1 second.

5. A flow meter according to claim 3, characterized in that the period $T_2$ lies in the range 50 milliseconds to 1 second, and in that the period $T_1$ lies in the range 100 milliseconds to 5 milliseconds.

6. A flow meter according to any one of claims 1 to 5, characterized in that said processor circuit comprises means for generating a correction signal based on said intermediate measurement signals ($M_1$ and $M_2$), said correction signal being substantially free from noise, together with means for generating said measurement signal (S) from said first intermediate measurement signal ($M_1$) and said correction signal, said measurement signal being substantially free from drift.

7. A flow meter according to claim 6, characterized in that said correction signal which is substantially free from noise is representative of the relaxation error measured at predetermined instants relative to the voltage signal of period $T_1$, and in that said first intermediate measurement signal ($M_1$) is representative of said voltage signal of period $T_1$ at said predetermined instants.

8. A flow meter according to any one of claims 1 to 7, characterized in that said processor circuit comprises means for filtering the first intermediate measurement signal ($M_1$) with a response time $t_1$, means for generating a correction signal equal to the difference between the first and second intermediate measurement signals ($M_1$ and $M_2$), means for filtering said difference signal with a response time of $t_2$, where $t_2$ is long enough to ensure that the filtered correction signal is substantially free from noise, and means for subtracting said filtered difference from the filtered first intermediate signal, thereby obtaining the measurement signal (S) having a response time $t_1$ and being substantially free from drift.

9. A flow meter according to any one of claims 1 to 7, characterized in that said processor circuit comprises means for filtering both intermediate measurement signals ($M_1$ and $M_2$) with a response time $t_2$, and for generating a correction signal equal to the difference between said filtered signals, where $t_2$ is sufficiently long to ensure that said filtered signals are substantially free from noise, means for filtering the first intermediate measurement signal ($M_1$) with a response time $t_1$, means for generating the difference between the correction signal and said first intermediate measurement signal ($M_1$) as filtered with a response time of $t_1$, thereby ensuring that the measurement signal has a response time of $t_1$ and is substantially free from drift.

**Ansprüche**

1. Elektromagnetischer Durchflußmesser, mit einem Meßrohr, in dem eine Flüssigkeit fließt, deren Durchflußmenge gemessen werden soll, mit Induktionsspulen, die von einem Erregerstrom durchflossen werden, um ein zur Strömungsrichtung der Flüssigkeit senkrecht orientiertes Magnetfeld zu erzeugen, mit diametral entgegengesetzten Elektroden zum Aufnehmen des Spannungssignals, das sich aus der das Magnetfeld unterbrechenden Flüssigkeitsströmung ergibt, mit einer Versorgungsschaltung für die Induktionsspulen und mit Mitteln zum Verarbeiten des von den Elektroden empfangenen Spannungssignals, dadurch gekennzeichnet, daß die Versorgungsschaltung Mittel zur Schaffung eines mit der Periode T periodischen Erregerstromes umfaßt, wobei sich jede Periode T aus der zeitlichen Kombination von n Perioden eines ersten Erregerstromes ($I_1$) mit der Periode $T_1$ und von m Perioden eines zweiten Erregerstromes ($I_2$) mit der Periode $T_2$, mit $T_2 > T_1$, ergibt und wobei die Periode $T_2$ ausreichend lang ist, damit ein Teil des entsprechenden empfangenden Spannungssignals frei von Nachwirkungsphänomenen ist, und daß die Verarbeitungsschaltung Mittel umfaßt, um ein erstes Meßzwischensignal ($M_1$) mit der Periode $T_1$, die eine kurze Einschwingzeit darstellt, ein zweites Meßzwischensignal ($M_2$), das dem Spannungssignal der Periode $T_2$ entspricht und keine Meßabweichung aufweist, auszubilden und um die zwei Meßzwischensignale ($M_1$, $M_2$) zu kombinieren und zu filtern, um ein Meßsignal S mit kurzer Einschwingzeit und ohne Meßabweichung auszubilden.

2. Durchflußmesser gemäß Anspruch 1, dadurch gekennzeichnet, daß der erste und der zweite Erregerstrom jeweils ein Strom ist, bei dem jede Periode mittels Wechselimpulsen mit einer Dauer von $T_1/2$ bzw. $T_2/2$ gebildet wird, und daß die Kombination darin besteht, n Perioden des ersten Stroms und m Perioden des zweiten Stroms im zeitlichen Wechsel aufeinanderfolgen zu lassen, derart, daß die Beziehung gilt:

$$T = n`T_1 + m`T_2.$$

3. Durchflußmesser gemäß Anspruch 1, dadurch gekennzeichnet, daß der erste Erregerstrom ein sinusförmiger Strom ist und daß jede Periode des zweiten Erregerstroms ein Paar von Wechselimpulsen der Dauer $t' = T_2/2$ aufweist, wobei die Kombination im Zusammensetzen des zweiten Stroms mit Hilfe des ersten Stroms besteht, derart, daß die Beziehung gilt:

$$T = n`T_1 = T_2.$$

4. Durchflußmesser gemäß Anspruch 2, dadurch gekennzeichnet, daß m gleich 1 ist, daß die Periode $T_1$ zwischen 0,1 und 0,005 Sekunden und die Periode $T_2$ zwischen 0,05 und 1 Sekunde liegt.

5. Durchflußmesser gemäß Anspruch 3, dadurch gekennzeichnet, daß die Periode $T_2$ zwischen 0,05 und 1 Sekunde liegt und daß die Periode $T_1$ zwischen 0,1 und 0,005 Sekunden liegt.

6. Durchflußmesser gemäß einem der Ansprüche 1 bis 5, dadurch gekennzeichnet, daß die Verarbeitungsschaltung Mittel umfaßt, um aus Meßzwischensignalen ($M_1$ und $M_2$) ein annähernd rauschfreies Korrektursignal und aus dem ersten Meßzwischensignal ($M_1$) und dem Korrektursignal ein annähernd meßabweichungsfreies Meßsignal (S) auszubilden.

7. Durchflußmesser gemäß Anspruch 6, dadurch gekennzeichnet, daß das annähernd rauschfreie Korrektursignal den Nachwirkungsfehler, der in vorgegebenen Momenten in bezug auf das Spannungssignal mit der Periode $T_1$ gemessen wird, darstellt und daß das erste Meßzwischensignal ($M_1$) das Spannungssignal mit der Periode $T_1$ in den vorgegebenen Momenten darstellt.

8. Durchflußmesser gemäß einem der Ansprüche 1 bis 7, dadurch gekennzeichnet, daß die Verarbeitungsschaltung Mittel zum Filtern des ersten Meßzwischensignals ($M_1$) mit einer Einschwingzeit $t_1$, Mittel zum Ausbilden eines Korrektursignals, das gleich der Differenz zwischen den zwei Meßzwischensignalen ($M_1$, $M_2$) ist, Mittel zum Filtern der Differenz der Signale mit einer Einschwingzeit $t_2$, die hinreichend groß ist, damit das gefilterte Korrektursignal annähernd rauschfrei ist, und Mittel zum Ausblenden dieser gefilterten Differenz aus dem gefilterten ersten Zwischensignal umfaßt, so daß sie ein im wesentlichen meßabweichungsfreies Meßsignal (S) mit einer Einschwingzeit $t_1$ liefert.

9. Durchflußmesser gemäß einem der Ansprüche 1 bis 7, dadurch gekennzeichnet, daß die Verarbeitungsschaltung Mittel zum Filtern der zwei Meßzwischensignale ($M_1$, $M_2$) mit einer Einschwingzeit $t_2$ und zum Ausbilden des Korrektursignals, das gleich der Differenz der zwei gefilterten Signale ist, umfaßt, wobei $t_2$ ausreichend groß ist, damit diese gefilterten Signale rauschfrei sind, und Mittel zum Filtern des Meßzwischensignals ($M_1$) mit einer Einschwingzeit $t_1$ und Mittel zum Ausbilden der Differenz zwischen dem Korrektursignal und dem gefilterten Meßzwischensignal ($M_1$) mit der Einschwingzeit $t_1$ umfaßt, so daß sie das im wesentlichen meßabweichungsfreie Meßsignal mit der Einschwingzeit $t_1$ liefert.

## FIG.1a

I B

t

## FIG. 1b

V

A B C

$U_1$

A

A B C

$U_2$

t

## FIG. 4

202

212
PRE AMP.

214
A/N

216
µP

218
N/A

206

208

200

204

GEN.

210

## FIG. 2

## FIG. 2a

## FIG. 3

(a)

(b)

(c) S₁

(d) S₂

(e) S₃

## FIG. 5

(a)

(b)

(c)

## FIG.6

## FIG.6a